(19) Europäisches Patentamt
European Patent Office
Office européen des brevets

(11) EP 4 685 672 A1

(12) EUROPÄISCHE PATENTANMELDUNG

(43) Veröffentlichungstag:
28.01.2026 Patentblatt 2026/05

(21) Anmeldenummer: 24190112.3

(22) Anmeldetag: 22.07.2024

(51) Internationale Patentklassifikation (IPC):
G06F 18/2131 (2023.01)    G06V 10/764 (2022.01)

(52) Gemeinsame Patentklassifikation (CPC):
G06F 18/2131; G06V 10/764

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Robert Bosch GmbH
70442 Stuttgart (DE)

(72) Erfinder: Tarsi, Tim Lucca
74385 Pleidelsheim (DE)

(54) **VORRICHTUNG UND COMPUTERIMPLEMENTIERTES VERFAHREN ZUM VERARBEITEN VON SENS-ORDATEN**

(57)    Eine Vorrichtung und ein computerimplementiertes Verfahren zum Verarbeiten von Sensordaten, wobei die Sensordaten in Teile unterteilt (202) und die Teile der Sensordaten jeweils auf eine Repräsentation, insbesondere einen Tensor abgebildet werden (204), wobei je Repräsentation abhängig von der Repräsentation ein der Repräsentation zugeordnetes Gewicht bestimmt wird (208), das einen Informationsgehalt des durch die Repräsentation repräsentierten Teils der Sensordaten charakterisiert, wobei Gewichte aus einer Verteilung der für die Repräsentationen bestimmten Gewichte gezogen werden (210), wobei abhängig von den den gezogenen Gewichten zugeordneten Repräsentationen eine Klassifikation und/oder Regression der Sensordaten bestimmt wird (212).

Fig. 2

**Beschreibung**

Stand der Technik

Die Erfindung geht von einer Vorrichtung und einem computerimplementierten Verfahren zum Verarbeiten von Sensordaten aus.

Die Verarbeitung von Sensordaten ist für eine Vielzahl von Anwendungen erforderlich.

Offenbarung der Erfindung

Für die Klassifikation oder Regression von Sensordaten ist es vorteilhaft, eine Menge der zu verarbeitenden Sensordaten bereits vor der Klassifikation oder Regression zu reduzieren.

Ein computerimplementiertes Verfahren zum Verarbeiten von Sensordaten sieht vor, dass die Sensordaten in Teile unterteilt und die Teile der Sensordaten jeweils auf eine Repräsentation, insbesondere einen Tensor abgebildet werden, wobei je Repräsentation abhängig von der Repräsentation ein der Repräsentation zugeordnetes Gewicht bestimmt wird, das einen Informationsgehalt des durch die Repräsentation repräsentierten Teils der Sensordaten charakterisiert, wobei Gewichte aus einer Verteilung der für die Repräsentationen bestimmten Gewichte gezogen werden, wobei abhängig von den den gezogenen Gewichten zugeordneten Repräsentationen eine Klassifikation und/oder Regression der Sensordaten bestimmt wird. Die Gewichte bringen heuristisches Wissen über die Sensordaten in die Auswahl der Teile ein. Die Menge der zu verarbeitenden Sensordaten wird mittels der Gewichte auf gemäß dem heuristischen Wissen relevante Teile der Sensordaten reduziert. Dadurch wird die Verarbeitung der Sensordaten gegenüber der Verarbeitung aller Teile beschleunigt.

Für Sensordaten ohne Kanal oder für Sensordaten aus einem Kanal kann vorgesehen sein, dass je Repräsentation Absolutwerte von Fourierkoeffizienten einer diskreten Fast Fourier Transformation der Repräsentation bestimmt werden, wobei das Gewicht je Repräsentation abhängig von einer Entropie einer Verteilung der Absolutwerte bestimmt wird. Die Größe der Absolutwerte quantifiziert das eingebrachte heuristische Wissen proportional zum Informationsgehalt des jeweiligen Teils.

Es kann vorgesehen sein, dass die Sensordaten in mehrere Kanäle unterteilt sind, wobei die jeweilige Repräsentation je Kanal einen Vektor umfasst, wobei die Sensordaten des jeweiligen Teils kanalweise auf je einen dem jeweiligen Kanal zugeordneten Vektor der Repräsentation abgebildet werden, wobei je Repräsentation und je Kanal ein Gewicht bestimmt wird, das einen Informationsgehalt des durch den Vektor repräsentierten Teils der Sensordaten charakterisiert, wobei das den Informationsgehalt des durch die Repräsentation repräsentierten Teils der Sensordaten charakterisierende Gewicht abhängig von den für die Vektoren der Repräsentation bestimmten Gewichte, insbesondere abhängig von einem Mittelwert der für die Vektoren der Repräsentation bestimmten Gewichte, bestimmt wird.

Für die in mehrere Kanäle unterteilten Sensordaten kann vorgesehen sein, dass je Vektor Absolutwerte von Fourierkoeffizienten einer diskreten Fast Fourier Transformation des Vektors bestimmt werden, wobei je Vektor das Gewicht abhängig von einer Entropie einer Verteilung der Absolutwerte bestimmt wird. Die Größe der Absolutwerte je Vektor quantifiziert das eingebrachte heuristische Wissen proportional zum Informationsgehalt des jeweiligen Kanals des jeweiligen Teils.

Für die in mehrere Kanäle unterteilten Sensordaten kann vorgesehen sein, dass je Repräsentation mit einer Hauptkomponentenanalyse Hauptrichtungen der Repräsentation bestimmt werden, wobei das Gewicht abhängig von einer totalen Varianz der Repräsentation bezüglich der Hauptrichtungen bestimmt wird. Die Hauptkomponentenanalyse wird z.B. für die Punkte durchgeführt, die durch die Vektoren der jeweiligen Kanäle definiert sind.

Es kann vorgesehen sein, dass zueinander zeitlich und/oder räumlich benachbarte Teile der Sensordaten auf zueinander benachbarte Repräsentationen abgebildet werden, wobei je Repräsentation Fourierkoeffizienten einer diskreten Fast Fourier Transformation der Repräsentation bestimmt werden, wobei das Gewicht je Repräsentation abhängig von einer Ähnlichkeit der Fourierkoeffizienten der jeweiligen Repräsentation zu den Fourierkoeffizienten wenigstens einer zur jeweiligen Repräsentation benachbarten Repräsentationen bestimmt wird. Die Größe der Ähnlichkeit quantifiziert das eingebrachte heuristische Wissen umgekehrt proportional zum Informationsgehalt. Das bedeutet, je ähnlicher die Fourierkoeffizienten zueinander sind, desto geringer ist der Informationsgehalt des Teils gegenüber dem wenigstens einen benachbarten Teil.

In einem Beispiel wird ein digitales Bild bereitgestellt, insbesondere ein Videobild, ein Radarbild, LiDAR-Bild, ein Ultraschallbild, ein Bewegungsmelderbild, oder ein Infrarotbild, bereitgestellt, wobei das Bild die Sensordaten, insbesondere in die mehreren Kanäle unterteilt, umfasst, wobei das Bild in ein Gitter mit Gitterzellen unterteilt wird, wobei je eine Gitterzelle je einen der Teile der Sensordaten umfasst. Das bedeutet, im Verfahren werden die Sensordaten aus dem digitalen Bild verarbeitet.

Das digitale Bild umfasst beispielsweise eine Menge von Pixeln umfasst, wobei je Pixel aus der Menge von Pixeln mehrere Kanälen mit je einem Pixelwert definiert sind, wobei die Teile der Sensordaten je eine Teilmenge der Menge von Pixeln umfassen, wobei je Teilmenge die Pixelwerte auf den Tensor abgebildet werden, insbesondere auf einen Vektor für die mehreren Kanäle oder auf eine Matrix, wobei die Matrix je Kanal der mehreren Kanäle einen Vektor umfasst.

Das Verfahren kann vorsehen, dass ein künstliches neuronales Netz abhängig von den den gezogenen Gewichten zugeordneten Repräsentationen zur Klassifikation oder zur Regression der Sensordaten trainiert wird. Bei einem auf einem Transformer basierenden künstlichen neuronalen Netz werden die den gezogenen Gewichten zugeordneten Repräsentationen sukzessive verarbeitet.

Die Repräsentationen und/oder die Gewichte können sukzessive oder zeitlich zumindest teilweise parallel zueinander berechnet werden.

Eine Vorrichtung zum Verarbeiten von Sensordaten sieht vor, dass die Vorrichtung wenigstens einen Prozessor und wenigstens einen Speicher umfasst, wobei der wenigstens eine Speicher vom wenigstens einen Prozessor ausführbare Instruktionen umfasst, bei deren Ausführung durch den Prozessor die Vorrichtung das Verfahren ausführt.

Ein Computerprogramm sieht vor, dass das Computerprogramm von einem Computer ausführbare Instruktionen umfasst, bei deren Ausführung durch den Computer auf dem Computer das Verfahren abläuft.

Weitere vorteilhafte Ausführungsformen sind der folgenden Beschreibung und der Zeichnung entnehmbar. In der Zeichnung zeigt:

Fig. 1 eine schematische Darstellung einer Vorrichtung zum Verarbeiten von Sensordaten,

Fig. 2 ein Flussdiagramm mit Schritten eines Verfahrens zum Verarbeiten der Sensordaten,

Fig. 3 ein erstes Beispiel für ein digitales Bild und für im Verfahren bestimmte Teile des digitalen Bildes,

Fig. 4 ein zweites Beispiel für ein digitales Bild und für im Verfahren bestimmte Teile des digitalen Bildes,

Fig. 5 ein drittes Beispiel für ein digitales Bild und für im Verfahren bestimmte Teile des digitalen Bildes.

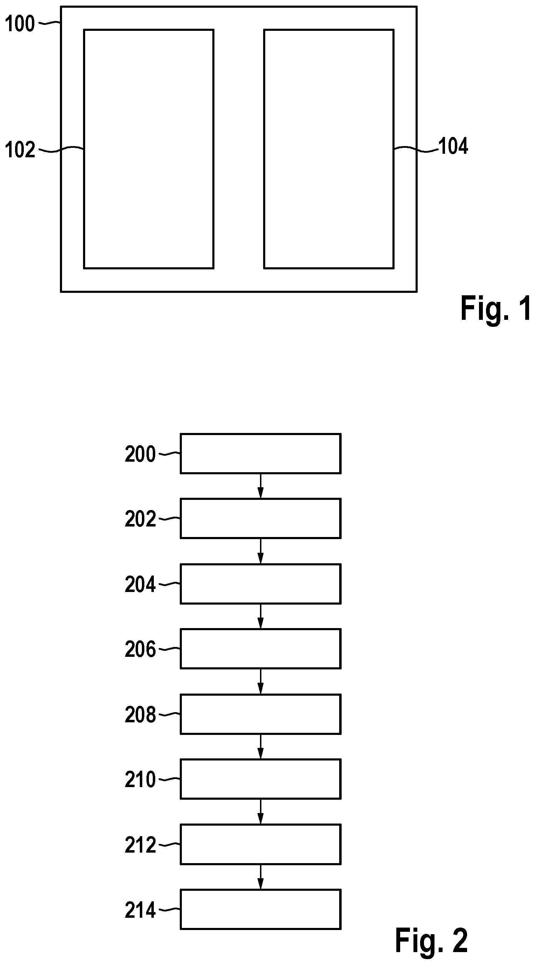

In Figur 1 ist eine Vorrichtung 100 zum Verarbeiten von Sensordaten schematisch dargestellt.

Die Vorrichtung 100 umfasst wenigstens einen Prozessor 102 und wenigstens einen Speicher 104.

Der wenigstens eine Speicher 104 umfasst vom wenigstens einen Prozessor 102 ausführbare Instruktionen, bei deren Ausführung durch den Prozessor 102 die Vorrichtung 100 ein Verfahren zum Verarbeiten der Sensordaten ausführt.

Es kann ein Computerprogramm vorgesehen sein, das von einem Computer ausführbare Instruktionen umfasst, bei deren Ausführung durch den Computer auf dem Computer das Verfahren abläuft.

In Figur 2 ist ein Flussdiagramm mit Schritten des Verfahrens dargestellt.

Das Verfahren umfasst einen Schritt 200.

Im Schritt 200 werden Sensordaten bereitgestellt. Die Sensordaten sind im Beispiel mehreren verschiedenen Kanälen zugeordnet.

Das Verfahren ist unabhängig von der Art des Sensors, der die Sensordaten liefert. Es kann eine Vorverarbeitung der Sensordaten vorgesehen sein. Die Sensordaten werden zum Beispiel verarbeitet, um eventuelles auftretendes Rauschen zu minimieren. Beispielsweise werden hochfrequente Störungen, die später Einfluss auf die Verteilung der Fourier Koeffizienten haben könnten, durch die Vorverarbeitung aus den Sensordaten entfernt. Dadurch wird eine Störung, die ein Endergebnis verfälschen könnte, entfernt.

Beispielsweise umfasst die Vorverarbeitung einen Antialiasing Filter.

Im Beispiel wird ein digitales Bild bereitgestellt. Das digitale Bild umfasst die Sensordaten. Das Bild ist z.B. ein RGB Bild. Die Kanäle sind im Beispiel Farbkanäle des Bildes. Das digitale Bild umfasst eine Menge von Pixeln. Je Pixel aus der Menge von Pixeln sind die mehreren Kanälen mit je einem Pixelwert definiert. Die Pixelwerte sind z.B. Werte von 0 bis 255.

Das digitale Bild wird z.B. in einem Datenformat, z.B. im JPEG Format, vorgegeben werden. Durch das JPEG Format gehen die hohen Frequenzbereiche des Rauschens durch die Kompression meistens verloren. Auf die Vorverarbeitung der Sensordaten aus dem Bild in JPEG Format kann in diesem Fall verzichtet werden. Die Vorverarbeitung erfolgt z.B. bei einem nicht komprimiert oder nicht vorverarbeiteten digitalen Bild.

Die Sensordaten können ohne Kanal bereitgestellt werden. Die Sensordaten können nur einem Kanal zugeordnet bereitgestellt werden, z.B. in einem monochromen Bild.

Das Bild kann ein Videobild, ein Radarbild, LiDAR-Bild, ein Ultraschallbild, ein Bewegungsmelderbild, oder ein Infrarotbild sein.

Das Verfahren umfasst einen Schritt 202.

Im Schritt 202 werden die Sensordaten in Teile unterteilt.

Im Beispiel wird das Bild in ein Gitter mit Gitterzellen unterteilt. Je eine Gitterzelle umfasst im Beispiel je einen der Teile der Sensordaten.

Das bedeutet, die Teile der Sensordaten umfassen je eine Teilmenge der Menge von Pixeln.

Das Verfahren umfasst einen Schritt 204.

Im Schritt 204 werden die Teile der Sensordaten jeweils auf eine Repräsentation abgebildet.

Im Beispiel ist die Repräsentation ein Tensor.

Je Teilmenge werden im Beispiel die Pixelwerte auf den Tensor abgebildet.

Es kann vorgesehen sein, dass der Tensor ein Vektor ist, wobei die Pixelwerte auf einen Vektor für die mehreren Kanäle abgebildet werden.

Es kann vorgesehen sein, dass der Tensor eine Matrix ist, wobei die Matrix je Kanal der mehreren Kanäle einen Vektor umfasst, auf den die Pixelwerte des jeweiligen Kanals abgebildet werden.

Im Beispiel sind die Sensordaten in mehrere Kanäle unterteilt. Das bedeutet, die jeweilige Repräsentation umfasst je Kanal einen Vektor. Das bedeutet, die Sensordaten des jeweiligen Teils werden kanalweise auf je einen dem jeweiligen Kanal zugeordneten Vektor der Repräsentation abgebildet.

Im Beispiel werden Sensordaten $x$ auf Repräsentationen $\tilde{x}[n]$ abgebildet:

$$x \in \mathbb{R}^{H \times W \times C} \to \tilde{x}[n] \in \mathbb{R}^{N \times CP^2}$$

wobei H die Höhe, W die Breite, C die Anzahl der Kanäle, N die Anzahl der Teile, und P die im Beispiel identischen Dimensionen der Gitterzellen, d.h. des zweidimensionalen Teils angibt. Im Beispiel wird ein Kern der Dimension $P \times P$ verwendet, um den jeweiligen Teil abzubilden.

Das Verfahren umfasst einen Schritt 206.

Im Schritt 206 werden je Repräsentation Absolutwerte von Fourierkoeffizienten einer diskreten Fast Fourier Transformation der Repräsentation bestimmt.

Das bedeutet, im Beispiel werden je Vektor die Absolutwerte von Fourierkoeffizienten einer diskreten Fast Fourier Transformation des Vektors bestimmt.

Im Beispiel wird je Kanal eine Fast Fourier Transformation bestimmt:

$$\tilde{X}[n, c, k] = \sum_{i=0}^{N-1} \tilde{x}[n, c, i] e^{-j\left(\frac{2\pi}{N}\right)kn}$$

Das Verfahren umfasst einen Schritt 208.

Im Schritt 208 wird je Repräsentation ein Gewicht bestimmt, das einen Informationsgehalt des durch die Repräsentation repräsentierten Teils der Sensordaten charakterisiert.

Im Beispiel wird das Gewicht je Repräsentation abhängig von einer Entropie einer Verteilung der Absolutwerte bestimmt. Im Beispiel wird je Vektor das Gewicht abhängig von der Entropie der Verteilung der für den Vektor bestimmten Absolutwerte bestimmt.

Im Beispiel wird die Entropie

$$H\big[\tilde{x}[n]\big] = -\frac{1}{|C|} \sum_{c,k} \tilde{X}[n, c, k] \log\big(\tilde{X}[n, c, k]\big)$$

bestimmt

Das bedeutet, im Beispiel wird je Repräsentation und je Kanal ein Gewicht bestimmt, das einen Informationsgehalt des durch den Vektor repräsentierten Teils der Sensordaten charakterisiert. Das Gewicht für die jeweilige Repräsentation wird abhängig von den kanalweise, d.h. je Vektor der Matrix, für die jeweilige Repräsentation bestimmten Gewichte bestimmt. Beispielsweise wird das Gewicht für die jeweilige Repräsentation abhängig von einem Mittelwert der für die Repräsentation bestimmten kanalweise bestimmten Gewichte.

Im Beispiel werden für die Repräsentationen $\tilde{x}[n]$ Gewichte $w[n]$ bestimmt:

$$\tilde{x}[n] \in \mathbb{R}^{N \times CP^2} \to w[n] \in \mathbb{R}^N$$

Daraus resultiert eine Verteilung der für die Repräsentationen bestimmten Gewichte.

Das Verfahren umfasst einen Schritt 210.

Im Schritt 210 werden Gewichte aus einer Verteilung der für die Repräsentationen bestimmten Gewichte gezogen. Im Beispiel wird eine vorgegebene Anzahl von Gewichten aus der Verteilung gezogen. Durch die Wahl der Anzahl wird ein vorgegebener Anteil der Teile der Sensordaten verwendet, und die anderen Teile weggelassen. Dies entspricht einer Drop-out Rate.

Das Verfahren kann vorsehen, die Anzahl von einem Nutzer abzufragen. Die Anzahl kann eine insbesondere von einem Nutzer vorab definierte Anzahl sein.

Im Beispiel wird aus einer Verteilung P gezogen:

$$\tilde{x}[n] \sim P \; mit \; P[k] = \frac{w[k]}{\sum_i w[i]}$$

Das Verfahren umfasst einen Schritt 212.

Im Schritt 212 wird abhängig von den Repräsentationen, die den gezogenen Gewichten zugeordnet sind, eine Klassifikation und/oder Regression der Sensordaten bestimmt.

Zum Trainieren kann das Verfahren vorsehen, dass die Schritt 200 bis 212 für verschiedene Sensordaten, insbesondere verschiedene Bilder ausgeführt werden. Zum Trainieren eines Klassifikators ist den jeweiligen Sensordaten z.B. ein Referenzwert für die Klassifikation zugeordnet. Zum Trainieren eines Regressionsmodells ist den jeweiligen Sensordaten z.B. ein Referenzwert für die Regression zugeordnet.

Zum Trainieren kann das Verfahren einen Schritt 214 umfassen.

Im Schritt 214 wird z.B. ein künstliches neuronales Netz abhängig von den den gezogenen Gewichten zugeordneten Repräsentationen der jeweiligen Sensordaten und der den jeweiligen Sensordaten zugeordneten Referenz zur Klassifikation trainiert. Im Schritt 214 wird z.B. ein künstliches neuronales Netz abhängig von den den gezogenen Gewichten zugeordneten Repräsentationen der jeweiligen Sensordaten und der den jeweiligen Sensordaten zugeordneten Referenz zur Regression trainiert.

Die Repräsentationen können im Schritt 204 sukzessive oder zeitlich zumindest teilweise parallel bestimmt werden. Die Fourierkoeffizienten können im Schritt 206 sukzessive oder zeitlich zumindest teilweise parallel bestimmt werden.

Das zeitlich zumindest teilweise parallele Bestimmen beschleunigt das Verfahren insgesamt. Das sukzessive Bestimmen benötigt mehr Rechenzeit und erfordert gegenüber der zeitlich zumindest teilweise parallelen Bestimmung weniger andere Rechenressourcen, wie Speicher oder Rechenleistung.

Statt die Gewichte abhängig von den Fourierkoeffizienten zu bestimmen, kann vorgesehen sein, dass je Repräsentation mit einer Hauptkomponentenanalyse Hauptrichtungen der Repräsentation bestimmt werden. Das Gewicht der jeweiligen Repräsentation wird z.B. abhängig von einer totalen Varianz der Repräsentation bezüglich der Hauptrichtungen bestimmt.

Statt die Gewichte abhängig von den Fourierkoeffizienten einer Repräsentation zu bestimmen, kann vorgesehen sein, dass zueinander zeitlich und/oder räumlich benachbarte Teile der Sensordaten auf Repräsentationen abgebildet werden, die als zueinander benachbarte Repräsentationen gekennzeichnet werden. Je Repräsentation wird das Gewicht z.B. abhängig von einer Ähnlichkeit der Fourierkoeffizienten der jeweiligen Repräsentation zu den Fourierkoeffizienten wenigstens einer zur jeweiligen Repräsentation benachbarten Repräsentationen bestimmt.

Beispielsweise wird das Gewicht w[n] für vier in x- und y-Richtung zu einer Gitterzelle n benachbarte Gitterzelle m abhängig von einer jeweiligen Repräsentationen $\tilde{x}[m]$ der benachbarten Gitterzelle m und abhängig von der Repräsen-tation $\tilde{x}[n]$ der Gitterzelle n das Gewicht

$$w[n] \; = \; \frac{1}{|N(\tilde{x}[n])|} \sum_{\tilde{x}[m] \in N(\tilde{x}[n])} S(\tilde{x}[n], \tilde{x}[m])$$

bestimmt, wobei

$$S(\tilde{x}[n], \tilde{x}[m]) := JSD(\tilde{x}[n], \tilde{x}[m]) = \frac{1}{2} D_{KL}(\tilde{x}[n] | \tilde{x}[m]) + \frac{1}{2} D_{KL}(\tilde{x}[m] | \tilde{x}[n])$$

und *JSD* die Jensen-Shannon Divergenz und $D_{KL}$ die Kulback-Leibler Divergenz repräsentiert.

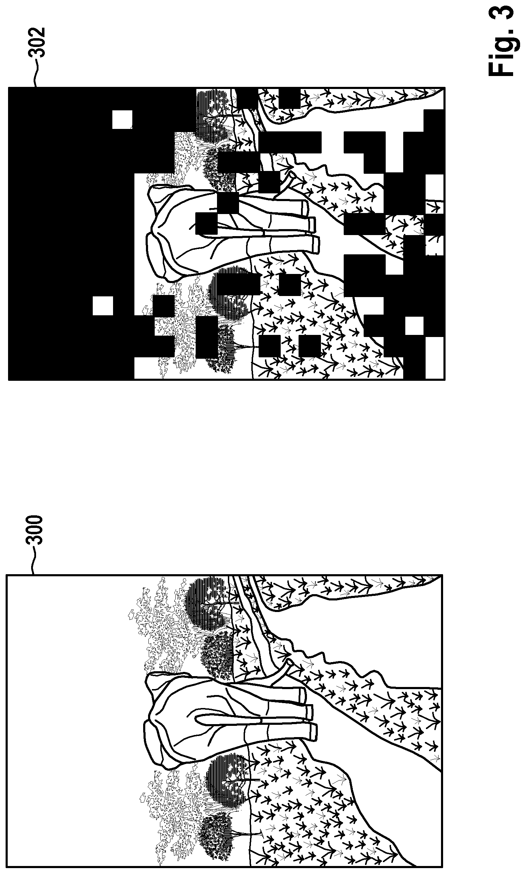

In Figur 3 ist links ein erstes Beispiel 300 für ein digitales Bild und rechts ein erstes Beispiel 302 für die Teile des digitalen Bildes dargestellt, die für die Klassifikation oder Regression verwendet werden. Nicht verwendete Teile des Bildes gemäß dem ersten Beispiel 300 sind in Figur 3 schwarz dargestellt. Das digitale Bild gemäß dem ersten Beispiel 300 ist aus der Domäne Natur.

Beispielsweise ist das Verfahren ein Verfahren zur Objekterkennung, in dem digitale Bilder aus der Domäne Natur zur Bestimmung der Klassifikation verarbeitet werden, wobei die Klassifikation das erkannte Objekt umfasst. Die Vorrichtung 100 ist z.B. ein Gerät zur Objekterkennung, das ausgebildet ist, ein digitales Bild aus der Domäne Natur zur Klassifikation oder Regression zu verarbeiten.

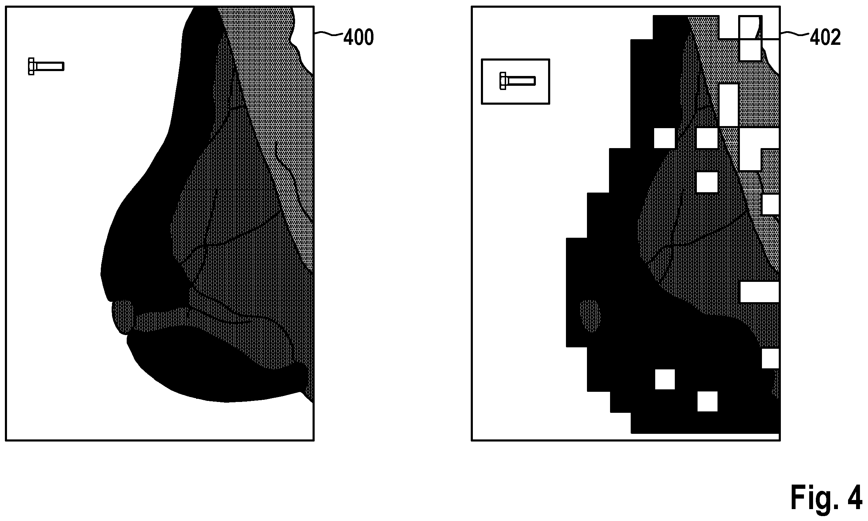

In Figur 4 ist links ein zweites Beispiel 400 für das digitale Bild und rechts ein zweites Beispiel 402 für die Teile des digitalen Bildes dargestellt, die für die Klassifikation oder Regression verwendet werden. Nicht verwendete Teile des Bildes gemäß dem zweiten Beispiel 400 sind in Figur 4 weiß dargestellt. Das digitale Bild gemäß dem ersten Beispiel 300 ist aus der Domäne Medizin.

Beispielsweise ist das Verfahren ein Diagnoseverfahren, in dem digitale Bilder aus der Domäne Medizin zur Bestimmung der Klassifikation verarbeitet werden, wobei die Klassifikation die Diagnose umfasst. Die Vorrichtung 100 ist z.B. ein medizinisches Gerät zur Diagnose, das ausgebildet ist, ein digitales Bild aus der Domäne Medizin zur Klassifikation oder Regression zu verarbeiten.

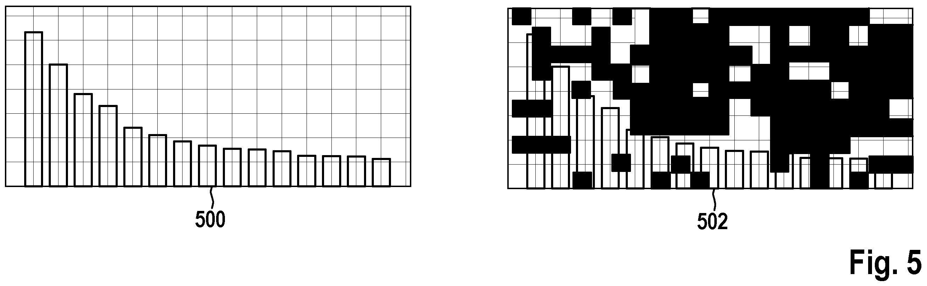

In Figur 5 ist links ein drittes Beispiel 500 für ein digitales Bild und rechts ein drittes Beispiel 502 für die Teile des digitalen Bildes dargestellt, die für die Klassifikation oder Regression verwendet werden. Nicht verwendete Teile des Bildes gemäß dem dritten Beispiel 500 sind in Figur 5 schwarz dargestellt. Das digitale Bild gemäß dem ersten Beispiel 300 ist aus der Domäne Wissenschaft.

**Patentansprüche**

1. Computerimplementiertes Verfahren zum Verarbeiten von Sensordaten, **dadurch gekennzeichnet, dass** die Sensordaten in Teile unterteilt (202) und die Teile der Sensordaten jeweils auf eine Repräsentation, insbesondere einen Tensor abgebildet werden (204), wobei je Repräsentation abhängig von der Repräsentation ein der Repräsentation zugeordnetes Gewicht bestimmt wird (208), das einen Informationsgehalt des durch die Repräsentation repräsentierten Teils der Sensordaten charakterisiert, wobei Gewichte aus einer Verteilung der für die Repräsentationen bestimmten Gewichte gezogen werden (210), wobei abhängig von den den gezogenen Gewichten zugeordneten Repräsentationen eine Klassifikation und/oder Regression der Sensordaten bestimmt wird (212).

2. Verfahren nach Anspruch 1, **dadurch gekennzeichnet, dass** je Repräsentation Absolutwerte von Fourierkoeffizienten einer diskreten Fast Fourier Transformation der Repräsentation bestimmt werden (206), wobei das Gewicht je Repräsentation abhängig von einer Entropie einer Verteilung der Absolutwerte bestimmt wird (208).

3. Verfahren nach einem der vorherigen Ansprüche, **dadurch gekennzeichnet, dass** die Sensordaten in mehrere Kanäle unterteilt sind, wobei die jeweilige Repräsentation je Kanal einen Vektor umfasst, wobei die Sensordaten des jeweiligen Teils kanalweise auf je einen dem jeweiligen Kanal zugeordneten Vektor der Repräsentation abgebildet werden (204), wobei je Repräsentation und je Kanal ein Gewicht bestimmt wird, das einen Informationsgehalt des durch den Vektor repräsentierten Teils der Sensordaten charakterisiert, wobei das den Informationsgehalt des durch die Repräsentation repräsentierten Teils der Sensordaten charakterisierende Gewicht abhängig von den für die Vektoren der Repräsentation bestimmten Gewichte, insbesondere abhängig von einem Mittelwert der für die Vektoren der Repräsentation bestimmten Gewichte, bestimmt wird (208).

4. Verfahren nach Anspruch 3, **dadurch gekennzeichnet, dass** je Vektor Absolutwerte von Fourierkoeffizienten einer diskreten Fast Fourier Transformation des Vektors bestimmt werden, wobei je Vektor das Gewicht abhängig von einer Entropie einer Verteilung der Absolutwerte bestimmt wird (206).

5. Verfahren nach Anspruch 3, **dadurch gekennzeichnet, dass** je Repräsentation mit einer Hauptkomponentenanalyse Hauptrichtungen der Repräsentation bestimmt werden, wobei das Gewicht abhängig von einer totalen Varianz der Repräsentation bezüglich der Hauptrichtungen bestimmt wird.

6. Verfahren nach Anspruch 1, **dadurch gekennzeichnet, dass** zueinander zeitlich und/oder räumlich benachbarte Teile der Sensordaten auf zueinander benachbarte Repräsentationen abgebildet werden, wobei je Repräsentation Fourierkoeffizienten einer diskreten Fast Fourier Transformation der Repräsentation bestimmt werden, wobei das Gewicht je Repräsentation abhängig von einer Ähnlichkeit der Fourierkoeffizienten der jeweiligen Repräsentation zu den Fourierkoeffizienten wenigstens einer zur jeweiligen Repräsentation benachbarten Repräsentationen bestimmt wird.

7. Verfahren nach einem der vorherigen Ansprüche, **dadurch gekennzeichnet, dass** ein digitales Bild, insbesondere ein Videobild, ein Radarbild, LiDAR-Bild, ein Ultraschallbild, ein Bewegungsmelderbild, oder ein Infrarotbild, bereitgestellt wird (200), wobei das Bild die Sensordaten, insbesondere in die mehreren Kanäle unterteilt, umfasst, wobei das Bild in ein Gitter mit Gitterzellen unterteilt wird (202), wobei je eine Gitterzelle je einen der Teile der Sensordaten umfasst.

8. Verfahren nach Anspruch 7, **dadurch gekennzeichnet, dass** das digitale Bild eine Menge von Pixeln umfasst, wobei je Pixel aus der Menge von Pixeln mehrere Kanälen mit je einem Pixelwert definiert sind, wobei die Teile der Sensordaten je eine Teilmenge der Menge von Pixeln umfassen, wobei je Teilmenge die Pixelwerte auf den Tensor abgebildet werden, insbesondere auf einen Vektor für die mehreren Kanäle oder auf eine Matrix, wobei die Matrix je Kanal der mehreren Kanäle einen Vektor umfasst.

9. Verfahren nach einem der vorherigen Ansprüche, **dadurch gekennzeichnet, dass** ein künstliches neuronales Netz abhängig von den den gezogenen Gewichten zugeordneten Repräsentationen zur Klassifikation oder zur Regression der Sensordaten trainiert wird (214).

10. Verfahren nach einem der vorherigen Ansprüche, **dadurch gekennzeichnet, dass** die Repräsentationen und/oder die Gewichte sukzessive oder zeitlich zumindest teilweise parallel zueinander bestimmt werden (204, 206).

11. Vorrichtung (100) zum Verarbeiten von Sensordaten, **dadurch gekennzeichnet, dass** die Vorrichtung (100) wenigstens einen Prozessor (102) und wenigstens einen Speicher (104) umfasst, wobei der wenigstens eine Speicher (104) vom wenigstens einen Prozessor (102) ausführbare Instruktionen umfasst, bei deren Ausführung durch den Prozessor (102) die Vorrichtung (100) das Verfahren nach einem der vorherigen Ansprüche ausführt.

12. Computerprogramm, **dadurch gekennzeichnet, dass** das Computerprogramm von einem Computer ausführbare Instruktionen umfasst, bei deren Ausführung durch den Computer auf dem Computer das Verfahren nach einem der Ansprüche 1 bis 10 abläuft.

100 —

102 —

104

**Fig. 1**

200 —

202 —

204 —

206 —

208 —

210 —

212 —

214 —

**Fig. 2**

302

300

Fig. 3

Fig. 4

EP 4 685 672 A1

Fig. 5

502

500

Europäisches
Patentamt

European
Patent Office

Office européen
des brevets

# EUROPÄISCHER RECHERCHENBERICHT

Nummer der Anmeldung

EP 24 19 0112

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CAMENT LEONARDO A ET AL: "Fusion of local normalization and Gabor entropy weighted features for face identification", PATTERN RECOGNITION, Bd. 47, Nr. 2, 18. September 2013 (2013-09-18), Seiten 568-577, XP028760031, ISSN: 0031-3203, DOI: 10.1016/J.PATCOG.2013.09.003 * Abstract * * Seite 568 - Seite 570 * * Seite 573 * * Seite 576 * * Abbildungen 1-4 * | 1-12 | INV. G06F18/2131 G06V10/764 |
| A | & SHIH-CHIA HUANG: "An Advanced Motion Detection Algorithm With Video Quality Analysis for Video Surveillance Systems", IEEE TRANSACTIONS ON CIRCUITS AND SYSTEMS FOR VIDEO TECHNOLOGY, IEEE, USA, Bd. 21, Nr. 1, 1. Januar 2011 (2011-01-01) , Seiten 1-14, XP011348668, ISSN: 1051-8215, DOI: 10.1109/TCSVT.2010.2087812 * das ganze Dokument * ----- | 1-12 | |
| A | SUN TONGFENG ET AL: "A comparative study of neural-network feature weighting", ARTIFICIAL INTELLIGENCE REVIEW, SPRINGER NETHERLANDS, NL, Bd. 52, Nr. 1, 27. März 2019 (2019-03-27), Seiten 469-493, XP036788204, ISSN: 0269-2821, DOI: 10.1007/S10462-019-09700-Z [gefunden am 2019-03-27] * das ganze Dokument * ----- | 1-12 | |

RECHERCHIERTE SACHGEBIETE (IPC)

G06F
G06V

Der vorliegende Recherchenbericht wurde für alle Patentansprüche erstellt

| Recherchenort | Abschlußdatum der Recherche | Prüfer |
|---|---|---|
| Den Haag | 7. Januar 2025 | Ionescu, Tudor |

EPO FORM 1503 03.82 (P04C03)